Europäisches Patentamt

European Patent Office

Office européen des brevets

(11) Publication number: **0 193 952**
**B1**

## EUROPEAN PATENT SPECIFICATION

(45) Date of publication of patent specification: **01.08.90**

(51) Int. Cl.⁵: **C 08 F 14/06, C 08 F 2/18**

(21) Application number: **86102952.8**

(22) Date of filing: **06.03.86**

(54) **A process for producing vinyl chloride resin.**

(30) Priority: **08.03.85 JP 46912/85**

(43) Date of publication of application:
**10.09.86 Bulletin 86/37**

(45) Publication of the grant of the patent:
**01.08.90 Bulletin 90/31**

(84) Designated Contracting States:
**BE DE GB**

(56) References cited:
**WO-A-81/01005**

(73) Proprietor: **KANEGAFUCHI KAGAKU KOGYO
KABUSHIKI KAISHA
2-4 Nakanoshima 3-chome
Kita-ku Osaka-shi Osaka-fu (JP)**

(72) Inventor: **Kobayashi, Teiji
12-34, 1-chome, Nishihata
Takasago-shi Hyogo-ken (JP)**
Inventor: **Tomishima, Yoshio
9-7, 5-chome, Tsutsujigaoka Tarumi-ku
Kobe-shi Hyogo-ken (JP)**
Inventor: **Yamamoto, Taizo
2-63, Okihama-machi Takasago-cho
Takasago-shi, Hyogo-ken (JP)**
Inventor: **Nojima, Yasuhiro
3781-26, Nishiyama Higashiyama
Ohkuradani Akashi-shi Hyogo-ken (JP)**

(74) Representative: **Patentanwälte Grünecker,
Kinkeldey, Stockmair & Partner
Maximilianstrasse 58
D-8000 München 22 (DE)**

The file contains technical information
submitted after the application was filed and
not included in this specification

Courier Press, Leamington Spa, England.

# EP 0 193 952 B1

**Description**

The present invention relates to a process for producing a vinyl chloride resin with high polymerization productivity and high bulk density and with less fish eyes by the use of a polymerization reactor equipped with a reflux condenser.

In the production of vinyl chloride resins, a reflux condenser is often used for improving the productivity as well as for saving energy. This is, however, accompanied by the problem that a suspension polymerization, under cooling by a reflux condenser, often causes an increased porosity in the interior of the particles and affects the smoothness of the surface of the particles. Furthermore, the resulting deterioration of the filling property causes lowering of the bulk density and an increase of fish eyes. Moreover, the use of a reflux condenser causes a violent bubbling phenomenon in the middle stage of polymerization and thereafter. It is well known that the bulk density is correlated with the productivity of the vinyl chloride resin in processing, and lowering of bulk density is known to cause lowering of the output of the extruder to thus result in aggravation of productivity in processing. As a means of improving the bulk density of polyvinyl chloride, a method, for instance, is known of adding a vinyl chloride monomer during the course of polymerization (Japanese Laid-Open Patent Application No. 97679/75). The vinyl chloride resin obtained by this process, however, has many fish eyes and, moreover, the residual monomer in the resin is difficult to remove.

Meanwhile, the market's need for less fish eyes in vinyl chloride resins (hereinafter referred to as "PVC") has increased year by year and the general tendency is that fish eyes of PVC plasticized with a high polymer plasticizer of relatively low plasticizing ability and high viscosity, such as polyesters, cause serious problems. In order to solve the problem of fish eyes, it is recommended to prevent the formation of low-porosity particles caused by low dispersion frequency by improved dispersion coalescence frequency of monomer droplets and also to improve the homogeneity of particles in the polymerized system through local monomer addition polymerization due to monomer condensed in the reflux condenser taking place in the top layer of polymer suspension through inhibition of bubbling in the middle stage of polymerization and thereafter. When a reflux condenser is used, gases generating from the monomer droplets and contained in the polymer suspension to result in lower homogeneity attainable by stirring which results in the aggravation of fish eyes through said bubbling phenomenon in which polymer particles form a floating creamy layer on the polymer suspension in the middle stage of polymerization and thereafter.

Further, when the bubbling phenomenon is pronounced, another problem arises, namely, that the polymer suspension overflows into the reflux condenser and its piping to cause deposition of scales to adversely affect the quality of the product, also causing lowering of the heat-removing capacity of the reflux condenser and seriously affecting the safety control of the process.

It is the object of the present invention to provide a process for producing PVC by the use of a polymerization reactor equipped with a reflux condenser having a higher bulk density and less fish eyes.

Said object is achieved by a process for producing a vinyl chloride resin in a suspension polymerization system of vinyl chloride monomer and other monomers capable of copolymerizing therewith by use of a polymerization reactor equipped with a reflux condenser in the gas phase portion of the polymerization reactor or outside the plymerization reactor, in the presence of a suspending agent and a polymerization initiator characterized in that a nonionic surface active agent having an HLB value in the range of 6—14 is added in an amount of 0.001—0.1 parts by weight to 100 parts by weight of vinyl chloride monomer and other monomers copolymerizable therewith, said nonionic surface active agent being added in an amount of at least 0.001 parts by weight at the time of initial charging of the vinyl chlorode monomer and other monomers, the water/monomer ratio of the initial charging is controlled in a range of 0.8—1.0, the polymerization is conducted in the first stage of polymerization to not more than 50% by weight in polymer conversion, in the second stage of polymerization, polymerization is conducted at a temperature 3—10°C higher than the polymerization temperature in the first stage, with water being added continuously or intermittently in the course of the polymerization not more than making up for the volumetrical contraction resulting from the progress of polymerization so that upon completion of the polymerization the water/monomer ratio is controlled in the range of 1.0—1.4.

It is known that the degree of lowering the bulk density of a resin when a reflux condenser is used increases with increasing quantity of heat removed by the reflux condenser (hereinafter referred to as "Qrc") and, as in the present invention (1) to set the water monomer ratio at the time of initial charging to a small value (i.e. increasing the charge amount of vinyl chloride monomer) and (2) to shift the polymerization temperature to a high value, both means enhancing the generation of heat in the course of polymerization. Since there is a certain limit to the heat removing capacity by a reactor jacket, it is inevitable to increase Qrc of the reflux condenser. This is supposedly contrary to the desired increase of bulk density. Surprisingly, however, the present inventors discovered that these two technical means enable a substantial increase of Qrc without causing a lowering of the bulk density.

Moreover, by addition of a nonionic surface active agent having an HLB value of 6—14 to the reaction system, the bubbling phenomenon in the middle stage of the polymerization and thereafter is not only suppressed because of increased wettability by water to the surface of PVC particles, but the dispersion-coalescence frequency of monomer droplets is enhanced since the interfacial tension of the polymerization suspension liquid lowers even when the reflux condenser is operated from the initial stage of

2

polymerization, which synergistically acts to thus decrease fish eyes dramatically.

The present invention has been completed on the discovery that by the combination of three requirements, i.e. (a) addition of a specified class of nonionic surface active agents, (b) initial water/monomer ratio of 0.8—1.0 and addition of water during polymerization, and (c) changing the polymerization temperature in the course of polymerization, the problems arising from the industrial utilization of the reflux condenser, such as a decrease in bulk density, deterioration in fish eyes, bubbling phenomenon etc, can be solved.

The nonionic surface active agents used in the process of the present invention should have an HLB value between 6 and 14, preferably between 8 and 13. In the case of less than 6, the surface active ability is too low to improve the fish eyes, and in the case of more than 14, the bubbling suppression effect in and after the middle stage of polymerization decreases owing to reduced wettability of the surface of the PVC particles.

As nonionic surface active agents used in the process of the present invention, polyoxyethylene alkyl ether, polyoxyethylene alkylphenyl ether, sorbitan fatty acid ester, polyoxyethylene sorbitan fatty acid ester, polyoxyethylene fatty acid ester, oxyethyleneoxypropylene block copolymer are included and these are used singularly or in combination of two or more.

The nonionic surface active agent is added in a range of 0.001—0.1 parts by weight, preferably 0.003—0.05 parts by weight to 100 parts by weight of vinyl chloride monomer and other monomers copolymerizable therewith. In the case of less than 0.001 parts by weight, a sufficient effect of the present invention is not obtained, and in the case of exceeding 0.1 parts by weight, adverse effects to the quality of the product arise.

At least 0.001 parts by weight of the nonionic surface active agent is added upon initial charging of reactants and it may, if necessary, further be added during the course of polymerization. For improvement of fish eyes, it is important to raise the dispersion-coalescence frequency of monomer droplets in the polymer particle forming step at the initial polymerization stage and to enhance the homogeneity of polymer particles in the polymerization system, and in this respect, it is an essential requisite to add the nonionic surface active agent at the time of initial charging. If the nonionic surface active agent with an HLB value between 6 and 14 is employed, the bubbling-suppressing effect in the middle stage of the polymerization and thereafter is attained even when it was added upon charging of the reactants. When added once upon initial charging, the surface active agent is, of course, added in an amount as aforesaid, but when it is added partly upon initial charging and the remainder is added continuously or intermittently in the course of polymerization, it is added in an amount of at least 0.001 parts by weight, preferably at least 0.002 parts by weight and the total amount after completion of the addition during the course of the polymerization is not more than 0.1 parts by weight, preferably not more than 0.05 parts by weight.

The present invention features set the water/monomer ratio at the time of initial charging within a range of 0.8—1.0 (ratio by weight, hereinafter the same applies) and control the water/monomer ratio upon completion of polymerization within a range of 1.0—1.4, preferably within a range of 1.0—1.2, by adding water continuously or intermittently during the course of polymerization with care not to exceed the volumetrical contraction resulting from the progress of polymerization.

The addition of water is done continuously or intermittently to make up for the volumetrical contraction resulting from the progress of polymerization, but it is preferably done continously when stability of the quality of the product, controllability of the polymerization temperature and the desired prevention of bubbling are taken into consideration.

The volumetrical contraction resulting from the progress of polymerization ($\Delta V$) is the quantity calculated by the following formula.

$$\Delta V = (\text{Monomer charging}) \times (\text{Conversion}) \times [(1/\text{monomer density}) - (1/1.4)]$$

When the water/monomer ratio at the time of intial charging is less than 0.8, coarse particles generate while, when it is in excess of 1.0, the bulk density increasing effect is reduced.

When the water/monomer ratio, upon completion of polymerization, is less than 1.0, the particle size becomes rough and the bulk density tends to get lower, whereas when the amount of water added is more than enough to make up for the volumetrical contraction, it results in an increase of the slurry volume in the polymerization system resulting, in extreme cases, in overflowing of the polymer slurry into the piping or the interior of the reflux condenser which causes a deposition of scales and, consequently, deterioration of quality (fish eyes). Hence, the water/monomer ratio, upon completion of the polymerization, is controlled to not more than 1.4, preferably not exceeding 1.2.

Further, the present invention features that polymerization is conducted in the first stage to not more than 50% by weight in terms of polymer conversion and polymerization in the second stage is conducted at a temperature 3—10°C higher than in the first stage. The conversion when the polymerization temperature is changed is not more than 50% by weight, preferably 10—50% by weight and more preferably 15—50% by weight. If it is less than 10% by weight, fish eyes tend to increase while, when it is in excess of 50% by weight, the bulk density increasing effect is reduced.

The other monomers which can be copolymerized with the vinyl chloride in the process of the present invention include, for instance, olefins such as ethylene and propylene, vinyl esters such as vinyl acetate and vinyl stearate, (meth) acrylate esters such as methyl acrylate and methyl methacrylate, esters or anhydrides of acids such as maleic acid and fumaric acid, nitrile compounds such as acrylonitrile and vinylidene compounds such as vinylidene chloride.

As polymerization initiators used in the process of the present invention, initiators normally used for suspension polymerization of vinyl chloride are included, namely organic peroxides such as lauroyl peroxide, 3,5,5-trimethylhexanoyl peroxide, t-butyl peroxypivalate, t-butyl peroxyneodecanoate, diisopropyl peroxydicarbonate, di-2-ethylhexyl peroxydicarbonate and acetyl cyclohexyl-sulfonyl peroxide, and azo compounds such as $\alpha,\alpha'$-azobis-isobutylonitrile and $\alpha,\alpha'$-azobis-2,4-dimethyl valeronitrile. These are used singularly or in combination with two or more.

As suspending agents used in the process of the present invention, known suspending agents such as partially saponified polyvinyl alcohol, vinyl acetate-maleic anhydride copolymer, styrene-maleic anhydride copolymer, polyvinyl pyrrolidone, gelatine, starch, methyl cellulose hydroxypropyl methylcellulose and polyethylene oxide either alone or in combination may be used. Partially saponified polyvinyl alcohol and/or hydroxypropyl methylcellulose, in view of their quality of polymerization stability, are preferred. A preferred amount of the above-mentioned suspending agents is 0.01—1 parts by weight per 100 parts by weight of vinyl chloride monomer, although there is no particular limit.

In the process of the present invention, it is also possible to use a molecular weight adjusting agent.

The initiator, suspending agent and molecular weight adjusting agent may be added at once to the polymerization system at the beginning of polymerization and it is also possible to add them in portions during the course of polymerization.

The polymerization temperature in the process of the present invention may normally be in the range of 40—75°C, although there is no particular limit.

According to the present invention, it is possible to conduct a suspension polymerization by the use of a polymerization reactor equipped with a reflux condenser for production of PVC high in bulk density with less fish eyes and it is also possible to increase the monomer charge without risk to suspension overflowing into the piping or the interior of reflux condenser, which, along with shortening of the polymerization time, enables an improvement of the productivity, the industrial significance of the present invention being thus remarkable.

Hereafter examples of the present invention as well as control examples are given.

In the description below, evaluation of the quality of the product was made by the following methods.

Bulk density: According to JIS K—6721.

Particle size distribution: Sifting and shaking method.

Porosity: The porosity was determined by the use of a mercury compression type porosimeter of Aminco Inc., U.S.A. (Model 5—7118) through measurement of the volume of mercury pressed in per 100 g PVC at an absolute pressure of 214—6971 kPa (31—1011 psi) (pore size 0.17—5.8 μm).

Fish eyes: 100 parts by weight of PVC obtained by polymerization, 50 parts by weight of plasticizer (PN 250 (adipic acid-type polyester: molecular weight approx. 2,000), producer: Adeca Argus Inc.), 3 parts by weight of tribase, 0.5 parts by weight of stearic acid, 0.4 parts by weight of titanium dioxide and 0.2 parts by weight of carbon black were mixed. After standing for 3 h, the mixture was milled through 20.3 cm (8 inch) rolls at 150°C (sheet thickness: 0.2 mm). Sheets were cut out after 8 min and 10 min of milling and the number of transparent particles (fish eyes) per 5 cm × 5 cm sheet were counted.

## Example 1

0.07 parts by weight of partially saponified polyvinyl alcohol being dissolved in 90 parts by weight of water were charged into a polymerization reactor (1.7 m³ in capacity) equipped with a reflux condenser having a heat transfer area of 5 m². 0.024 parts by weight of di-2-ethylhexyl peroxy-di-carbonate and 0.024 parts by weight of t-butyl peroxy-neodecanoate were added as initiators, and 0.01 parts by weight of sorbitan monolaurate (HLB: 8.6) was further added. Then 100 parts by weight parts of vinyl chloride monomer (682 kg) were charged after deaeration, the temperature was raised to 54°C (polymerization temperature in the first stage) for the polymerization to start, flow of cooling water was started through the reflux condenser when the polymer conversion reached 3% and polymerization was conducted with Qrc being adjusted to 115 MJ/h (27,500 kcal/h) 30 minutes after the start of flowing of cooling water. When the polymer conversion had reached 35%, the polymerization temperature was raised to 59°C (polymerization temperature in the second stage) and polymerization was continued with Qrc readjusted to 167 MJ/h (40,000 kcal/h). The operation of the reflux condenser was stopped when the inside pressure lowered by 98 kPa (1 kg/cm²) from the steady pressure corresponding to the polymerization temperature in the second stage to recover the unpolymerized monomer. The slurry was then dehydrated and dried in a fluidized bed drier to obtain PVC. Immediately after the start of polymerization, water was continuously added at a constant rate by the use of a reciprocating pump all through the period of polymerization so that the water/monomer ratio at the start of recovery (upon completion of polymerization) was adjusted to 1.1 (total amount of water added: 20 parts by weight).

The resulting PVC was satisfactory with regard to the bulk density and fish eyes as shown in Table 1 with no indication of an overflow of the polymer suspension into the reflux condenser.

## Example 2

Polymerization was conducted in the same way as in Example 1 except that the amount of sorbitan monolaurate was changed to 0.0015 parts by weight and the resulting polymer was dehydrated and dried.

The resulting PVC was satisfactory with regard to the bulk density and fish eyes as shown in Table 1 with no indication of an overflow of the polymer suspension into the reflux condenser.

### Example 3

Polymerization was conducted in the same way as in Example 1 except that the nonionic surface active agent was changed from sorbitan monolaurate to polyoxyethylene nonylphenyl ether (HLB: 12.4) and the resulting polymer was dehydrated and dried.

The resulting PVC was satisfactory in bulk density and fish eyes as shown in Table 1 without indication of an overflow of the polymer suspension into the reflux condenser.

### Example 4

Polymerization was conducted in the same way as in Example 1 except that the polymerization temperature was changed when the conversion reached 50% and the polymer was dehydrated and dried.

The resulting PVC was satisfactory with regard to bulk density and fish eyes as shown in Table 1 with no indication of an overflow of the polymer suspension into the reflux condenser.

### Example 5

Polymerization was conducted in the same way as in Example 1 except that the polymerization temperature in the first stage was adjusted to 52°C and in the second stage of 62°C and the Qrc of the reflux condenser at the polymerizing temperatures in the first and second stages were adjusted to 94 MJ/h (22,500 kcal/h) and 199 MJ/h (47,500 kcal/h) respectively and the polymer was dehydrated and dried.

The resulting PVC was satisfactory with regard to bulk density and fish eyes as shown in Table 1 with no indication of an overflow of the polymer suspension into the reflux condenser.

### Example 6

Polymerization was conducted in the same way as in Example 1 except that the water/monomer ratio at the time of initial charing was adjusted to 1.0 without changing the total charging volume and 651 kg of vinyl chloride monomer was charged and water was added so that the water/monomer ratio at the time of starting recovery of unpolymerized monomer was adjusted to 1.4 (total amount of water added: 40 parts by weight) and Qrc at the polymerization temperatures in the first and second stages were adjusted to 111 MJ/h (26,500 kcal/h) and 159 MJ/h (38,000 kcal/h), respectively, and the polymer was dehydrated and dried.

The resulting PVC was satisfactory with respect to bulk density and fish eyes as shown in Table 1 with no indication of an overflow of the polymer suspension into the reflux condenser.

### Control Example 1

Polymerization was conducted in the same way as in Example 1 except that the sorbitan monolaurate was not added. Overflowing of the polymer suspension was observed and the resulting PVC contained many fish eyes. The result is shown in Table 2.

### Control Examples 2 and 3

Polymerization was conducted in the same way as in Example 1 except that the type of nonionic surface active agent was changed.

Both polymers obtained by Control Example 2 (sorbitan monostearate, HLB: 4.7) and Control Example 3 (polyoxyethylene sorbitan monolaurate, HLB: 16.7) were inferior in fish eyes.

### Control Example 4

Polymerization was conducted in the same way as in Example 1 except that sorbitan monolaurate was added continuously from the time the conversion reached 20% to the completion of polymerization, without addition at the time of initial charging.

As shown by Table 2, though no flowing of polymer suspension into the reflux condenser was observed, the resulting PVC was inferior in fish eyes.

### Control Example 5

Polymerization was conducted in the same way as in Example 1 except that the polymerization temperature was changed when the conversion reached 60%. The resulting PVC was low in bulk density, as is apparent from Table 2.

### Control Example 6

Polymerization was conducted in the same way as in Example 1 except that the polymerization temperature was set at 57°C for both first and second stages and Qrc was adjusted to 142 MJ/h (34,000 kcal/hr). The resulting PVC was low in bulk density, as is apparent from Table 2.

### Control Example 7

Polymerization was conducted in the same way as in Example 1 except that the polymerization temperature in the first stage was set at 49.5°C and that in the second stage at 65°C and Qrc at the polymerization temperatures in the first and second stages was adjusted to 73 MJ/h (17,000 kcal/h) and 213 MJ/h (51,000 kcal/h), respectively. The resulting PVC had many fish eyes, as is apparent from Table 2.

### Control Example 8

Polymerization was conducted in the same way as in Example 1 except that the water/monomer ratio at the time of initial charging was adjusted to 0.7 without changing the total charging volume and 755 kg of vinyl chloride monomer was charged and water was added so that the water/monomer ratio at the time of starting recovery was adjusted to 1.1 (total amount of water added: 40 parts by weight) and Qrc at the polymerization temperatures in the first and second stages were adjusted to 126 MJ/h (30,000 kcal/h) and 184 MJ/h (44,000 kcal/h), respectively. The resulting PVC contained many coarse particles, as shown by Table 2.

### Control Example 9

Polymerization was conducted in the same way as in Example 1 except that the water/monomer ratio at the time of initial charging was adjusted to 1.1 without changing the total charging volume (charged quantity of vinyl chloride monomer: 622 kg) and water was added so that the water/monomer ratio at the time of starting recovery was adjusted to 1.4 (total amount of water added: 30 parts by weight) and Qrc at the polymerization temperatures in the first and second stages were adjusted to 106 MJ/h (25,400 kcal/h) and 151 MJ/h (36,000 kcal/h), respectively. The resulting PVC was low in bulk density, as shown by Table 2.

### Control Example 10

Polymerization was conducted in the same way as in Example 1 except that the sorbitan monolaurate was not added, the water/monomer ratio at the time of initial charging was adjusted to 1.2 without changing the total charging volume (charged quantity of vinyl chloride monomer: 600 kg) and no water was added in the course of polymerization and Qrc was adjusted to 126 MJ/h (30,000 kcal/h) throughout the polymerization. As shown by Table 2, overflowing of the polymer suspension was observed, and the resulting PVC was low in bulk density and had many fish eyes.

### Control Example 11

0.07 parts by weight of partially saponified polyvinyl alcohol dissolved in 120 parts by weight of water was charged into a polymerization reactor (1.7 $m^3$ in capacity). 0.024 parts by weight of di-2-ethylhexyl peroxy-di-carbonate and 0.024 parts by weight of t-butyl peroxyneodecanoate were added as initiators. 100 parts by weight of vinyl chloride monomer (600 kg) were charged after deaeration and the temperature was raised to 57°C for the polymerization to start. Unpolymerized monomer was recovered when the inside pressure dropped by 98 kPa (1 kg/cm²) from the steady pressure corresponding to the polymerization temperature. Then the slurry was dehydrated and dried in a fluidized bed drier to obtain PVC. During the course of polymerization, no water was added and no reflux condenser was used. The results are given in Table 2. The resulting PVc had a bulk density of 0.525 and contained 80 fish eyes after 8 min and 25 after 10 min.

6

TABLE 1

| | Example | | | | | |
|---|---|---|---|---|---|---|
| | 1 | 2 | 3 | 4 | 5 | 6 |
| Reflux condenser | Used | " | " | " | " | " |
| Nonionic surface active agent | Sorbitan monolaurate | " | Polyoxy ethylene nonylphenyl ether | Sorbitan monolaurate | " | " |
| HLB | 8.6 | " | 12.4 | 8.6 | " | " |
| Amount added | 0.01 | 0.0015 | 0.01 | 0.01 | " | " |
| Time of addition | Upon charging | " | " | " | " | " |
| Water/monomer ratio | | | | | | |
| Time/initial charging | 0.9 | " | " | " | " | 1.0 |
| Start of recovery | 1.1 | " | " | " | " | 1.4 |
| Initial charge/monomer (kg) | 682 | " | " | " | " | 651 |
| Water added (parts by weight) | 20 | " | " | " | " | 40 |
| Polymerizing temp. (°C) | | | | | | |
| 1st stage | 54 | " | " | " | 52 | 54 |
| 2nd stage | 59 | " | " | " | 62 | 59 |
| Time of changing temp. (Conversion %) | 35 | " | " | 50 | 35 | " |

TABLE 1 (continued)

| | Example | | | | | |
|---|---|---|---|---|---|---|
| | 1 | 2 | 3 | 4 | 5 | 6 |
| Qrc MJ/h (kcal/h) | | | | | | |
| 1st stage | 115 (27500) | " | " | " | 94 (22500) | 111 (26500) |
| 2nd stage | 167 (40000) | " | " | " | 197 (47500) | 159 (38000) |
| Overflowing into R. Condenser | None | " | " | " | " | " |
| Particle size distribution (%) | | | | | | |
| 60 mesh on | 0 | 0 | 0 | 0 | 0 | 0 |
| 60—100 mesh | 25 | 23 | 27 | 24 | 24 | 22 |
| 100—145 mesh | 67 | 66 | 68 | 66 | 67 | 68 |
| 145—200 mesh | 8 | 11 | 5 | 10 | 9 | 10 |
| 200 mesh pass | 0 | 0 | 0 | 0 | 0 | 0 |
| Porosity (ml/100 g) | 25.0 | 24.8 | 25.1 | 25.3 | 24.0 | 25.5 |
| Bulk density | 0.540 | 0.538 | 0.532 | 0.531 | 0.543 | 0.530 |
| Fish eye (piece/5 cm × 5 cm) | | | | | | |
| 8th minute | 72 | 78 | 74 | 70 | 78 | 71 |
| 10th minute | 21 | 23 | 23 | 19 | 25 | 19 |

TABLE 2

| | | Control Example | | | | |
|---|---|---|---|---|---|---|
| | 1 | 2 | 3 | 4 | 5 | 6 |
| Reflux condenser | Used | " | " | " | " | " |
| Nonionic surface active agent | None | Sorbitan monostearate | Polyoxy ethylene sorbitan monolaurate | Sorbitan monolaurate | " | " |
| HLB | None | 4.7 | 16.7 | 8.6 | " | " |
| Amount added | None | 0.01 | 0.01 | 0.01 | " | " |
| Time of addition | None | Upon charging | " | Continuous addition* | Upon charging | " |
| Water/monomer ratio | | | | | | |
| Time/initial charging | 0.9 | " | " | " | " | " |
| Start of recovery | 1.1 | " | " | " | " | " |
| Initial charge/monomer (kg) | 682 | " | " | " | " | " |
| Water added (parts by weight) | 20 | " | " | " | " | " |
| Polymerizing temp. (°C) | | | | | | |
| 1st Stage | 54 | " | " | " | " | 57 |
| 2nd Stage | 59 | " | " | " | " | 57 |
| Time of changing temp. (Conversion %) | 35 | " | " | " | 60 | — |

TABLE 2 (continued)

| | Control Example | | | | | |
| | 1 | 2 | 3 | 4 | 5 | 6 |
| --- | --- | --- | --- | --- | --- | --- |
| Qrc MJ/h (kcal/h) | | | | | | |
| 1st stage | 115 (27500) | " | " | " | " | 142 (34000) |
| 2nd stage | 167 (4000) | " | " | " | " | 142 (34000) |
| Overflowing into R. Condenser | Present | None | Present | None | None | None |
| Particle size distribution (%) | | | | | | |
| 60 mesh on | 0 | 0 | 0 | 0 | 0 | 0 |
| 60—100 mesh | 20 | 46 | 18 | 21 | 24 | 23 |
| 100—145 mesh | 65 | 48 | 65 | 67 | 66 | 67 |
| 145—200 mesh | 13 | 5 | 15 | 12 | 10 | 9 |
| 200 mesh pass | 2 | 1 | 2 | 0 | 0 | 1 |
| Porosity (ml/100 g) | 24.0 | 23.6 | 25.2 | 24.7 | 26.0 | 26.8 |
| Bulk density | 0.535 | 0.530 | 0.520 | 0.537 | 0.518 | 0.513 |
| Fish eye (piece/5 cm × 5 cm) | | | | | | |
| 8th minute | 375 | 250 | 175 | 243 | 68 | 67 |
| 10th minute | 140 | 125 | 72 | 85 | 17 | 16 |

TABLE 2 (continued)

| | Control Example | | | | |
|---|---|---|---|---|---|
| | 7 | 8 | 9 | 10 | 11 |
| Reflux condenser | " | " | " | " | Not used |
| Nonionic surface active agent | " | " | " | None | None |
| HLB | " | " | " | None | None |
| Amount added | " | " | " | None | None |
| Time of addition | " | " | " | None | None |
| Water/monomer ratio | | | | | |
| Time/initial charging | " | 0.7 | 1.1 | 1.2 | " |
| Start of recovery | " | 1.1 | 1.4 | 1.2 | " |
| Initial charge/monomer (kg) | " | 755 | 622 | 600 | " |
| Water added (parts by weight) | " | 40 | 30 | — | — |
| Polymerizing temp. (°C) | | | | | |
| 1st Stage | 49.5 | 54 | 54 | 57 | " |
| 2nd Stage | 65 | 59 | 59 | 57 | " |
| Time of changing temp. (Conversion %) | 35 | 35 | 35 | — | — |

EP 0 193 952 B1

TABLE 2 (continued)

| | Control Example | | | | |
|---|---|---|---|---|---|
| | 7 | 8 | 9 | 10 | 11 |
| Qrc Mj/h (kcal/h) | | | | | |
| 1st stage | 71 (17000) | 126 (30000) | 106 (25400) | 126 (3000) | — |
| 2nd stage | 213 (51000) | 184 (44000) | 151 (36000) | 126 (3000) | — |
| Overflowing into R. Condenser | None | None | None | Present | — |
| Particle size distribution (%) | | | | | |
| 60 mesh on | 0 | 20 | 0 | 0 | 0 |
| 60—100 mesh | 26 | 53 | 20 | 12 | 11 |
| 100—145 mesh | 67 | 25 | 69 | 70 | 68 |
| 145—200 mesh | 7 | 2 | 11 | 17 | 20 |
| 200 mesh pass | 0 | 0 | 0 | 1 | 1 |
| Porosity (ml/100 g) | 21.8 | — | 26.6 | 27.5 | 25.0 |
| Bulk density | 550 | — | 0.515 | 0.500 | 0.529 |
| Fish eye (piece/5 cm × 5 cm) | | | | | |
| 8th minute | 213 | — | 65 | 334 | 80 |
| 10th minute | 75 | — | 15 | 129 | 25 |

*Continuous addition from the conversion 20% to the completion of polymerization.

**Claims**

1. A process for producing a vinyl chloride resin in a suspension of polymerization system of vinyl chloride monomer and other monomers capable of copolymerizing therewith by use of a polymerization reactor equipped with a reflux condenser in the gas phase portion of the polymerization reactor or outside the polymerization reactor, in the presence of a suspending agent and a polymerization initiator characterized in that a nonionic surface active agent having an HLB value in the range of 6—14 is added in an amount of 0.001—0.1 parts by weight to 100 parts by weight of vinyl chloride monomer and other monomers copolymerizable therewith, said nonionic surface active agent being added in an amount of at least 0.001 parts by weight at the time of initial charging of the vinyl chloride monomer and other monomers, the water/monomer ratio of the initial charging is controlled in a range of 0.8—1.0, the polymerization is conducted in the first stage of polymerization to not more than 50% by weight in polymer conversion, in the second stage of polymerization, polymerization is conducted at a temperature 3—10°C higher than the polymerization temperature in the first stage, with water being added continuously or intermittently in the course of the polymerization not more than making up for the volumetrical contraction resulting from the progress of polymerization so that upon completion of the polymerization the water/monomer ratio is controlled in the range of 1.0—1.4.

2. The process of claim 1, wherein the nonionic surface active agent comprises a polyoxyethylene alkyl ether, a polyoxyethylene alkylphenyl ether, a sorbitan fatty acid ester, a polyoxyethylene sorbitan fatty acid ester, a polyoxyethylene fatty acid ester and an oxyethylene oxypropylene block copolymer or a mixture thereof.

3. The process of claim 1, wherein a nonionic surface active agent having a HLB value in a range of 8—13 is used.

4. The process of claim 1, wherein the nonionic surface active agent is added in an amount of 0.003—0.05 weight part to 100 weight parts of vinyl chloride monomer and other monomers copolymerizable therewith.

5. The process of claim 1, wherein the nonionic surface active agent is added once upon initial charging of the reactants, without being added in the course of polymerization.

6. The process of claim 1, wherein the amount of nonionic surface active agent added upon initial charging is at least 0.002 weight part per 100 weight parts of vinyl chloride monomer and other monomers copolymerizable therewith.

7. The process of claim 1, wherein the water/monomer ratio upon completion of the polymerization is controlled within a range of 1.0—1.2.

8. The process of claim 1 wherein the polymerization in the first stage of polymerization is conducted to 10—50% by weight in polymer conversion.

9. The process of claim 1, wherein partially saponified polyvinyl alcohol and/or hydroxypropyl methylcellulose is used as a supporting agent.

**Patentansprüche**

1. Verfahren zur Herstellung eines Vinylchloridharzes in einem Suspensionspolymerisationssystem von Vinylchloridmonomer und anderen Monomeren, die damit copolymerisieren können, durch Verwendung eines Polymerisationsbehälters, der mit einem Rückflußkondensator in dem Gasphasenenteil des Polymerisationsbehälters oder außerhalb des Polymerisationsbehälters ausgestattet ist, in Gegenwart eines Suspendiermittels und eines Polymerisationsinitiators, dadurch gekennzeichnet, daß ein nichtionisches oberflächenaktives Mittel, mit einem HLB-Wert im Bereich von 6—14 in einer Menge von 0,001—0,1 Gewichtsteilen zu 100 Gewichtsteilen Vinylchloridmonomer und anderen damit copolymerisierbaren Monomeren gegeben wird, wobei das nichtionische oberflächenaktive Mittel in einer Menge von wenigstens 0,001 Gewichtsteilen zur Zeit der Anfangsbeschickung des Vinylchloridmonomers und anderer Monomere zugegeben wird, das Wasser/Monomer-Verhältnis der Anfangsbeschickung in einem Bereich von 0.8—1,0 kontrolliert wird, die Polymerisation in der ersten Polymerisationsstufe bis zu nicht mehr als 50 Gew.-% der Polymerunwandlung durchgeführt wird, in der zweiten Polymerisationsstufe die Polymerisation bei einer Temperatur um 3—10°C höher als die Polymerisationstemperatur der ersten Stufe durchgeführt wird, wobei Wasser kontinuierlich oder mit Unterbrechungen im Verlauf der Polymerisation derart zugegeben wird, daß es nicht mehr also die volumetrische Schrumpfung, die sich aus dem Verlauf der Polymerisation ergibt, ausgleicht, so daß bei Abschluß der Polymerisation das Wasser/Monomer-Verhältnis im Bereich von 1,0—1,4 kontrolliert wird.

2. Verfahren nach Anspruch 1, worin das nichtionische oberflächenaktive Mittel einen Polyoxyethylenalkylether, einen Polyoxyethylenalkylphenylether, einen Sorbitanfettsäureester, einen Polyoxyethylensorbitanfettsäureester, einen Polyoxyethylenfettsäureester und ein Oxyethylenoxypropylen-Blockcopolymer oder eine Mischung daraus umfaßt.

3. Verfahren nach Anspruch 1, worin ein nichtionisches oberflächenaktives Mittel mit einem HLB-Wert im Bereich von 8—13 verwendet wird.

4. Verfahren nach Anspruch 1, worin das nichtionische oberflächenaktive Mittel in einer Menge von 0,003—0,05 Gewichtsteilen zu 100 Gewichtsteilen Vinylchloridmonomer und anderen damit

# EP 0 193 952 B1

copolymerisierbaren Monomeren gegeben wird.

5. Verfahren nach Anspruch 1, worin das nichtionische oberflächenaktive Mittel auf einmal bei der Anfangsbeschickung der Reaktanten zugebegen wird, ohne im Verlauf der Polymerisation zugegeben zu werden.

6. Verfahren nach Anspruch 1, worin die Menge des nichtionischen oberflächenaktiven Mittels, die bei der Anfangsbeschickung zugegeben wird, wenigstens 0,002 Gewichsteile pro 100 Gewichsteile Vinylchloridmonomer und anderer damit copolymerisierbarer Monomere beträgt.

7. Verfahren nach Anspruch 1, worin das Wasser/Monomer-Verhältnis bei Abschluß der Polymerisation innerhalb eines Bereichs von 1,0—1,2 kontrolliert wird.

8. Verfahren nach Anspruch 1, worin die Polymerisation in der ersten Polymerisationsstufe bis zu 10—50 Gew.-% in der Polymerumwandlung durchgeführt wird.

9. Verfahren nach Anspruch 1, worin teilweise verseifter Polyvinylalkohol und/oder Hydroxypropylmethylcellulose als Suspendiermittel verwendet wird.

## Revendications

1. Procédé de production d'une résine de chlorure de vinyle dans un système de polymérisation en suspension de monomère de chlorure de vinyle et d'autres monomères pouvant copolymériser avec celui-ci par l'utilisation d'un réacteur de polymérisation équipé d'un condenseur à reflux dans la partie de phase gazeuse du réacteur de polymérisation ou à l'extérieur du réacteur de polymérisation, en présence d'un agent de mise en suspension et d'un initiateur de polymérisation, caractérisé en ce qu'un agent tensio-actif non ionique avant une valeur HLB de l'ordre de 6—14 est ajouté à raison de 0,001—0,1 partie en poids à 100 parties en poids de monomère de chlorure de vinyle et d'autres monomères copolymérisables avec celui-ci, l'agent tensio-actif non ionique étant ajouté à raison d'au moins 0,001 partie en poids au moment du chargement initial du monomère de chlorure de vinyle et des autres monomères, le rapport eau/monomère du chargement initial est réglé dans une gamme de 0,8—1,0, la polymérisation est réalisée dans le premier stade de polymérisation jusqu'à pas plus de 50% en poids de conversion de polymère, dans le second stade de polymérisation, la polymérisation est réalisée à une température de 3—10°C plus élevée que la température de polymérisation dans le premier stade, de l'eau étant ajoutée de façon continue ou par intermittence au cours de la polymérisation en une quantité ne dépassant pas la compensation de la contraction volumétrique résultant de l'avancement de la polymérisation de telle sorte qu'à l'achèvement de la polymérisation le rapport eau/monomère soit réglé dans la gamme de 1,0—1,4.

2. Procédé suivant la revendication 1, caractérisé en ce que l'agent tensio-actif non ionique comprend un éther alkylique de polyoxyéthylène, un éther alkylphénylique de polyoxyéthylène, un ester d'acide gras de sorbitane, un ester d'acide gras de polyoxyéthylène sorbitane, un ester d'acide gras de polyoxyéthylène et un copolymère bloc d'oxyéthylène-oxypropylène ou un mélange de ceux-ci.

3. Procédé suivant la revendication 1, caractérisé en ce que l'on utilise un agent tensio-actif non ionique ayant une valeur HLB de l'ordre de 8—13.

4. Procédé suivant la revendication 1, caractérisé en ce que l'on ajoute l'agent tensio-actif non ionique à raison de 0,003—0,05 partie en poids à 100 parties en poids de monomère de chlorure de vinyle et d'autres monomères copolymérisables avec celui-ci.

5. Procédé suivant la revendication 1, caractérisé en ce que l'on ajoute l'agent tensio-actif non ionique en une seule fois lors du chargement initial des réactifs, sans l'ajouter au cours de la polymérisation.

6. Procédé suivant la revendication 1, caractérisé en ce que la quantité d'agent tensio-actif non ionique ajouté lors du chargement initial constitue au moins 0,002 partie en poids pour 100 parties en poids de monomère de chlorure de vinyle et d'autres monomères copolymérisables avec celui-ci.

7. Procédé suivant la revendication 1, caractérisé en ce que le rapport eau/monomère lors de l'achèvement de la polymérisation est réglé dans une gamme de 1,0—1,2.

8. Procédé suivant la revendication 1, caractérisé en ce que la polymérisation dans le premier stade de polymérisation est réalisée jusqu'à 10—50% en poids de conversion de polymère.

9. Procédé suivant la revendication 1, caractérisé en ce que l'on utilise comme agent de mise en suspension de l'alcool polyvinylique partiellement saponifié et/ou de l'hydroxypropyl méthylcellulose.